(19) Europäisches Patentamt
European Patent Office
Office européen des brevets

(11) Veröffentlichungsnummer: 0 310 787
A2

(12) # EUROPÄISCHE PATENTANMELDUNG

(21) Anmeldenummer: 88113127.0

(51) Int. Cl.4: C08B 11/145

(22) Anmeldetag: 12.08.88

(30) Priorität: 03.10.87 DE 3733507

(43) Veröffentlichungstag der Anmeldung:
12.04.89 Patentblatt 89/15

(84) Benannte Vertragsstaaten:
AT BE CH DE ES FR GB IT LI NL SE

(71) Anmelder: Degussa Aktiengesellschaft
Weissfrauenstrasse 9
D-6000 Frankfurt am Main 1(DE)

(72) Erfinder: Stober, Reinhard, Dr.
Bornwiesenweg 22
D-6457 Hasselroth(DE)
Erfinder: Bischoff, Dietmar
Kälberauer Strasse 6
D-8755 Alzenau-Michelbach(DE)
Erfinder: Huss, Michael
Richard-Wagner-Strasse 18a
D-6236 Eschborn(DE)

(54) **Verfahren zur Herstellung von tertiären oder quaternären Stickstoff enthaltenden Celluloseethern.**

(57) Die Erfindung betrifft ein Verfahren zur Herstellung tertiären oder quaternären Stickstoff enthaltenden Celluloseethern durch Umsetzung von Alkylenepoxiden mit Cellulose bzw. deren Derivaten in alkalischem Medium in Gegenwart von Wasser.

Als Kationisierungsmittel setzt man Alkylenepoxide oder deren Gemische mit den allgemeinen Formeln

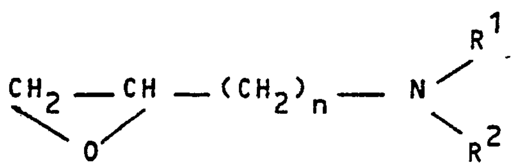

(I)

oder

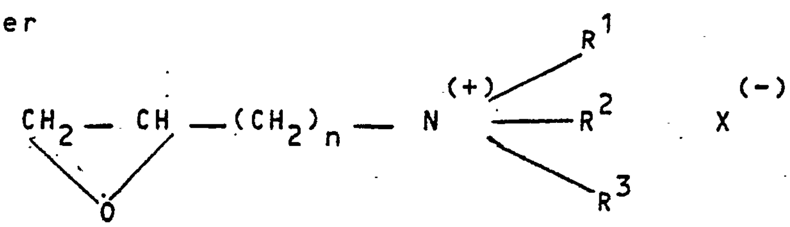

(II)

ein, in denen n = 1, 2 o der 3 ist, $R^1$, $R^2$ und $R^3$ gleichen oder verschiedenen Alkylresten mit 1 bis 18 Kohlenstoffatomen oder $R^1$ dem Benzylrest oder $-C_2H_4OH$ entspricht, und X-Chlorid, Bromid, Sulfat oder Acetat bedeuten.

EP 0 310 787 A2

Xerox Copy Centre

## Verfahren zur Herstellung von tertiären oder quaternären Stickstoff enthaltenden Celluloseethern.

Die Erfindung betrifft ein Verfahren zur Herstellung von tertiären und quaternären Stickstoff enthaltenden Celluloseethern.

Quaternären Stickstoff enthaltende Celluloseether sind bereits aus der DE-OS 1 593 657 (US-PS 3 472 840) bekannt und werden gemäß den dort beschriebenen Reaktionsbedingungen durch Umsetzung von Cellulose mit z. B. 2,3-Epoxypropyltrimethylammoniumchlorid in organischen Lösungsmitteln gewonnen, die 0,2 bis 5 Gew.-% Wasser, bezogen auf die Cellulose, enthalten können.

Kationisch modifizierte Cellulosederivate werden auch in der JP-OS 53/90368 (CA 89 (22): 18 14 23 w) beschrieben.

Als Reaktionsmedium dient hier ein Gemisch aus Wasser, Isoprolyalkohol und wässriger Natronlauge.

Die Gegenwart eines unter Reaktionsbedingungen gegenüber dem Veretherungsreagenz weitgehend inerten organischen Lösungsmittels ist auch gemäß DE-OS 3 301 667 besonders günstig.

Die Cellulose wird in dem organischen Lösungsmittel suspendiert, die gebildete Suspension mit der wässrigen Lösung eines Alkalihydroxids versetzt und anschließend das Veretherungsreagenz zugegeben.

Nach diesem Muster läuft auch die Reaktion gemäß EP-A-0189 935 ab.

In allen genannten Fällen erhält man wasserlösliche Produkte, die man nach der Neutralisation abtrennt, auswäscht und trocknet.

Die bekannten Verfahren bedingen die Verwendung großer Mengen organischer Lösungsmittel, geringe Ansatzkonzentrationen, niedrige Ausbeuten und auch den Verlust von Produkt durch dessen Löslichkeit im Reaktionsgemisch.

Die so modifizierte Cellulose findet Anwendung in der Kosmetik (Haarbehandlung), im Textilbereich (Weichmacher, Antistatika), in der Papierindustrie, bei der Flotation und Flockung und in Bohrspülflüssigkeiten.

Aufgabe der Erfindung ist ein vereinfachtes Verfahren zur Herstellung von tertiären und quaternären Stickstoff enthaltenden Celluloseethern.

Gegenstand der Erfindung ist ein Verfahren zur Herstellung von tertiären oder quaternären Stickstoff enthaltenden Celluloseethern durch Umsetzung von Alkylenepoxiden mit Cellulosen bzw. deren Derivaten im alkalischen Medium in Gegenwart von Wasser, das dadurch gekennzeichnet ist, daß die Reaktionsmischung 10 bis 25 Gew.-% Wasser, bevorzugt 12 bis 16 Gew.-%, enthält, bezogen auf deren Gesamtmenge, und in scheinbar trockenem, pulverförmigem Zustand vorliegt.

Die Reaktionsmischung wird durch den Zusatz von 1 bis 4 Gew.-% eines Alkali- oder Erdalkalihydroxids bzw. Oxids oder eines Alkalisilikats und/oder -aluminats, oder eines Gemisches aus Alkali- oder Erdalkalihydroxiden bzw. -oxiden und Alkalicarbonaten oder eines Gemisches einer oder mehrerer dieser Hydroxide, Oxide oder Carbonate mit einem Alkalisilikat und/oder -aluminat alkalisiert.

Bevorzugt verwendet man 1,9 bis 2,1 Gew.-% eines Alkalihydroxids bzw. 2,9 bis 3,1 Gew.-% des Erdalkalihydroxids bzw. -oxids, jeweils bezogen auf die Cellulosemenge (Trockensubstanz)

In diesem Zusammenhang bedeutet Alkali insbesondere das Natrium- und Erdalkali das Calciumkation.

Erfindungsgemäß erfolgt die Veretherung der Cellulose bzw. deren Derivaten mit Alkylenepoxiden oder Gemischen dieser Epoxide der allgemeinen Formel

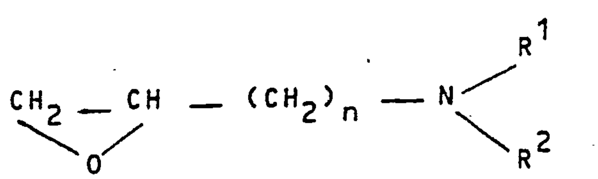

(I)

oder vorzugsweise

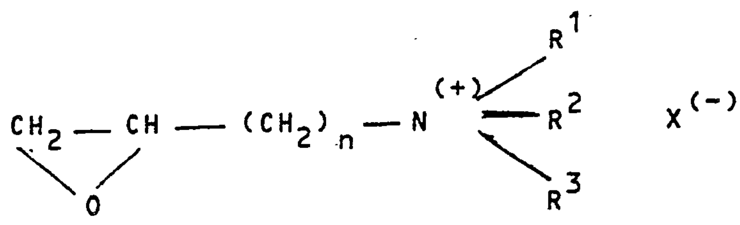

(II)

in der n eine Zahl von 1 bis 3 ist, inbesondere 1, $R^1$, $R^2$ und $R^3$ gleichen oder verschiedenen Alkylresten mit 1 bis 18 Kohlenstoffatomen oder $R^1$ = Benzyl oder $C_2H_4OH$ entspricht und $X^{(-)}$ = Chlorid, Bromid, Sulfat oder Acetat bedeutet, insbesondere aber Chlorid. Bevorzugt sind Alkylreste mit 1 bis 4 Kohlenstoffatomen.

Anstelle der Alkylenepoxide können auch die entsprechenden Chlorhydrine eingesetzt werden, wobei dann spätestens im Reaktionsmedium die Umwandlung zu den Epoxiden entsprechend den Formeln (I) und (II), die mit der Cellulose bzw. deren Derivaten reagieren, erfolgt.

Hierbei muß allerdings zusätzlich zur katalytischen die stöchiometrische Menge Alkali zur Umwandlung der Chlorhydrine in die Epoxide eingesetzt werden.

Erfindungsgemäß eingesetzt werden Cellulose und die folgenden Derivate:
HEC ( = Hydroxyethylcellulose)
MHC ( = Methylhydroxyethylcellulose)
CMC ( = Carboxymethylcellulose bzw. deren Salze)
Hydroxypropylcellulose
sowie Cellulosen die Kombinationen der verschiedenen Reste tragen.

Eine Neutralisation des Endprodukts ist in Abhängigkeit von der Verwendung häufig nicht erforderlich.

Es besteht allerdings die Möglichkeit, gleich beim Mischvorgang eine organische Säure (z. B. Adipinsäure) zuzusetzen, um ein neutrales Produkt zu erhalten.

Man setzt pro Hydroxylgruppe im Cellulose- bzw. Derivatemolekul 0,005 bis 1 Mol Epoxid gemäß den Formeln (I) oder (II), vorzugsweise 0,005 bis 0,6 Mol Epoxid, ein. Daraus resultiert bei 100 % Ausbeute ein Substitutionsgrad (DS) von 0,005 bis 1, bzw. von 0,05 bis 0,6. In einer bevorzugten Ausführungsform geht man dabei so vor, daß man die Mischung aus Cellulose bzw. deren Derivat, der alkalisierend wirkenden Substanz, dem Alkylenepoxid und Wasser in einem Intensivmischer innerhalb von 10 Sekunden bis 25 Minuten, bevorzugt 20 Sekunden bis 5 Minuten, homogenisiert, anschließend das Gemisch ausschleust und die Kationsierungsreaktion bis zum Ende ablaufen läßt.

Weitere Mischenergien und zusätzliche Verfahrensschritte sind dann nicht mehr erforderlich.

Der Bereich der Reaktionstemperatur erstreckt sich von 5 bis 75 °C, insbesondere von 5 bis 45 °C.

Wünscht man eine schnelle Umsetzung, werden der Mischer und der Behälter, in dem die Restreaktion stattfindet, auf die oben angegebenen Temperaturen bis 75 °C aufgeheizt.

Es ist aber ebenso möglich, nur den Mischer zu beheizen und die Restreaktion ohne weiteren Heizaufwand bei Raumtemperatur (20 bis 25 °C) ablaufen zu lassen oder umgekehrt.

Bevorzugt arbeitet man bei der Temperatur, die sich ohne äußere Wärmezufuhr im Mischer einstellt (18 bis 30 °C, bevorzugt 20 bis 25 °C), füllt nach der Homogenisierung der Mischung gleich in einen für den Versand vorgesehenen Behälter oder ein Silo ab und läßt die Kationisierungsreaktion bei der sich dann in Abhängigkeit von der Umgebungstemperatur oder Raumtemperatur einstellenden Temperatur bis zum Ende ablaufen.

Diese liegt in Abhängigkeit von z. B. jahreszeitlich bedingten Schwankunen bei 18 bis 30° C, insbesondere bei 20 bis 25 °C.

Die geringe Verweilzeit im Mischaggregat ermöglicht dadurch auch eine kontinuierliche Durchführung der Trockenkationisierung.

Als Intensivmischer geeignet sind z. B. Pflugscharmischer, insbesondere mit einem oder mehreren Messerköpfen (kontinuierlich und diskontinuierlich) und Befeuchtungs-Durchflußmischer (kontinuierlich).

Die Reihenfolge des Reagentienzusatzes zur vorgelegten Cellulose bzw. -derivats ist für den Erfolg nicht ausschlaggebend. Im allgemeinen geht man so vor, daß die alkalisierend wirkende Substanz in wässriger Lösung bzw. als wässrige Suspension oder als Feststoff bei laufendem Mischer auf die vorgelegte Cellulose bzw. deren Derivat getropft oder bevorzugt innerhalb von 10 Sekunden bis 5 Minuten gesprüht wird, anschliessend das Kationisierungsmittel und gegebenfalls auch noch Wasser bevorzugt aufgesprüht werden.

Die oben angegebene Zeit für die Homogenisierung beginnt mit der Zudosierung des Epoxids.

Man kann aber auch alle Komponenten gleichzeitig der Cellulose bzw. deren Derivaten zusetzen.

Den Wassergehalt stimmt man so ab, daß die für die Umsetzung notwendige Mindestmenge an Wasser in Höhe von 10 Gew.-% erreicht bzw. überschritten wird, natürlich unter Berücksichtigung der durch die Epoxidlösung eingebrachten Wassermengen.

Neben diesen Komponenten sind in einer Verfahrensvariante 0,01 bis 2 Gew.-%, bevorzugt 0,1 bis 1,0 Gew.-%, einer feinteiligen Kieselsäure in dem Reaktionsgemisch vorhanden, bezogen auf dessen Gesamtmenge.

Dabei kann es sich um gefällte oder durch Flammenhydrolyse erzeugte Kieselsäuren handeln, hydrophil oder hydrophob.

Die spezifischen Oberflächen liegen zwischen 60 und 700 $m^2/g$, bevorzugt 100 und 450 $m^2/g$ (BET-Messung nach DIN 66 131, $N_2$-Adsorption bei der Temperatur des flüssigen Stickstoffs, vorheriges Ausheizen der Probe bei 110 °C).

Bevorzugt eingesetzt werden hydrophile gefällte Kieselsäuren mit einer spezifischen Oberfläche von 190 bis 450 $m^2/g$, insbesondere eine sprühgetrocknete gefällte Kieselsäure mit einer spezifischen Oberfläche von 190 $m^2/g$ (BET-Messung).

Man verwendet auch Gemische aus hydrophoben und hydrophilen Kieselsäuren.

Analytik

Jeweils ca. 20 g der Reaktionsproben werden pro Analyse entnommen und in 200 g eines Isopropanol/Wasser- bzw. Aceton/Wasser-Gemisches (jeweils 4:1) dispergiert, mit 10 %iger Salzsäure auf pH 4 eingestellt und abfiltriert. Nach zweimaligem Auswaschen mit jeweils 200 g Isopropanol/Wasser bzw. Aceton/Wasser wird scharf abgesaugt und der Filterkuchen bei 75 °C 4 Stunden im Vakuumtrockenschrank getrocknet. Anschließend wird der Umsetzungsgrad über eine Stickstoffbestimmung nach Kjeldahl ermittelt.

Die Ausbeute kann als Verhältnis von gefundenem Stickstoffgehalt zu theoretischem Stickstoffgehalt angegeben werden. Dabei muß beachtet werden, daß die nicht kationisierte Cellulose bzw. deren Derivat eventuell einen Grundstickstoffgehalt besitzt, der von dem gefundenen Stickstoffgehalt subtrahiert werden muß.

$$\%\ \text{Ausbeute} = \frac{(\%N_{gef.} - \%N_o)}{\%N_{th.}} \times 100$$

$\%N_{gef.}$ = gefundener Stickstoffgehalt

$\%N_{th.}$ = theoretisch errechneter Stickstoffgehalt

$\%N_o$ = Grundstickstoffgehalt der Cellulose bzw. deren Derivat

$$\%N_{gef.} = \frac{V \times 0{,}14}{E}$$

V = Verbrauch an HCl-Lösung bei der Titration zu Stickstoffbestimmung nach Kjeldahl (in ml)

E = Einwaage der kationischen Cellulose bzw. deren Derivat (trocken) (in g)

$$\%N_{th.} = \frac{m_{Nt}}{m_{kat.}\text{Cellulose}} \times 100$$

$m_{Nt}$ = berechnete Masse Stickstoff für einen bestimmten theor. DS.

$m_{kat.}$Cellulose = berechnete Masse des Reaktionsproduktes für einen bestimmten theor. DS.

Eine weitere Möglichkeit besteht darin, die Ausbeute als Verhältnis aus praktischem und theoretischem Substitutionsgrad anzugeben:

$$\%\ \text{Ausbeute} = \frac{\text{praktischer DS}}{\text{theoretischer DS}} \times 100$$

Berechnung des praktischen DS:

$$\text{prakt. DS} = \frac{(\%N_{gef.} - \%N_o) \times M_c\ \text{g/mol}}{(14\ \text{g/mol} \times 100) - (\%N_{gef.} - \%N_o) \times 151{,}64\ \text{g/mol}}$$

$M_c$ (g/mol) = Molekulargewichtsanteil(Monomer-Einheit) der Cellulose bzw. deren Derivat

151,64 g/mol = Molekulärgewicht des Kationisierungsreagenzes (QUAB(R)) (2,3-Epoxypropyltrimethylammoniumchlorid)

% N x 151,64 g/mol = Korrekturfaktor für das Anwachsen der Molekularmasse jeder substituierten Cellulose-Monomereinheit

$\%N_o$ = Grundstickstoffgehalt der Cellulose bzw. deren Derivat

Zur Berechnung herangezogene Mol-Masse und verwendete Cellulosen- bzw. -Derivate (relative Molmassen der Monomer-Einheiten):

| | | |
|---|---|---|
| Cellulose | Typ Elcema(R) 100 p (Degussa AG) | M = 162,15 g/mol |
| HEC | Typ QP 4400 (Union Carbide Corp.) | M = 206,2 g/mol * |
| MHC | Tylose(R) MH 2000 xp (Hoechst AG)<br>Tylose(R) MHB 10 000 yp | M = 220,23 g/mol * |
| Na-CMC | Tylose(R) C 1000 p<br>Tylose(R) CB 30 000 p | M = 245,19 g/mol * |

* genaue Werte nicht möglich, da der DS der Derivate uneinheitlich ist. Deshalb wurden diese Werte als Berechnungsgrundlage verwendet.

Berechnung des theoretischen DS:

$$\text{theor. DS} = \frac{n_{QUAB^{(R)}}}{n_{Cellulose}}$$

$n_{QUAB^{(R)}}$ = Molmenge eingesetzten Kationisierungsreagenzes QUAB (R)

$n_{Cellulose}$ = Molmenge trockene Cellulose bzw. deren Derivat

Die nach beiden Rechenmethoden erhaltenen Ergebnisse unterscheiden sich, da die Beziehung zwischen Substitutionsgrad und Stickstoffgehalt der kationischen Cellulose bzw. deren Derivat nicht linear ist.

Experimenteller Teil

Allgemeine Angaben:

Die Gemische wurden nach der angegebenen Mischzeit sofort ausgeschleust und in dicht verschlossenen Polyethylensäcken bei Raumtemperatur (20-25 °C) gelagert.
Wenn nicht anders angegeben, wurden die Proben mit einer Isopropanol/Wasser-Mischung (80:20 Gewichtsanteile) wiederholt ausgewaschen, getrocknet und analysiert.

I. Einfluß des $H_2O$ bzw. NaOH-Gehaltes

In einem 4 l Pflugscharmischer mit einem Messerkopf wurden nacheinander 630 g HEC (4,6 % Feuchte), 6,0 g sprühgetrocknete Kieselsäure (190 $m^2/g$), 20,03 g NaOH ( ≙ 1 %) bzw. 40,07 g NaoH ( ≙ 2 %) als 30 %-Lösung, 162,5 g QUAB $^{(R)}$ (68 % Aktivgehalt) sowie die in Tabelle 1 angegebenen Mengen $H_2O$ bei laufendem Mischer zugegeben und 10 Minuten intensiv gemischt.

Tabelle 1

| Versuch-Nr. | $H_2O$-Zugabe (g) | Gesamtfeuchte (%) | %NaOH (bezogen auf atro HEC) | $\%N_{cation.}$ | $DS_{prakt.}$ | Ausbeute (%) |
|---|---|---|---|---|---|---|
| I a | 24.00 | 12 | 1 | 0,413 | 0,064 | 25,5 |
| I b | 64,09 | 16 | 1 | 0,426 | 0,066 | 26,3 |
| Ic | 108,22 | 20 | 1 | 0,543 | 0,085 | 34,0 |
| I d | 10,76 | 12 | 2 | 1,145 | 0,193 | 77,0 |
| I e | 51,20 | 16 | 2 | 1,157 | 0,195 | 77,9 |
| I f | 95,69 | 20 | 2 | 1,162 | 0,196 | 78,3 |

Die Ausbeutebestimmung erfolgte nach 4 Tagen.
Der theoretische Substitutionsgrad ($DS_{th}$) beläuft sich auf 0,25.

II. Abhängigkeit Ausbeute ↔ DS

In einem 4 l Pflugscharmischer mit einem Messerkopf wurden nacheinander 700 g HEC (5 % Feuchte), 44,33 g NaOH (30 %) sowie die in Tabelle 2 angegebenen QUAB- bzw. $H_2O$-Mengen zugegeben und 10 Minuten intensiv gemischt.

Nach 5 Tagen Lagerung bei Raumtemperatur wurden die Mischungen analysiert und die in Tabelle 2 zusammengefaßten Ergebnisse erhalten:

Tabelle 2

| Katalysatormenge: 1 % NaOH, QUAB: Aktivgehalt 69,8 %, 21 % $H_2O$ | | | | | | | |
|---|---|---|---|---|---|---|---|
| Versuch-Nr. | $DS_{theo.}$ | QUAB (g) | $H_2O$ | Gesamtfeuchte % | $\%N_{cation.}$ | $DS_{prakt.}$ | Ausbeute (%) |
| II a | 0, | 21,02 | 42,93 | 14 | 0,171 | 0,026 | 85,5 |
| II b | 0,07 | 49,04 | 40,97 | 14 | 0,375 | 0,058 | 82,2 |
| II c | 0,15 | 105,10 | 37.06 | 14 | 0,763 | 0,123 | 81,7 |
| II d | 0,30 | 210,19 | 29,73 | 14 | 1,322 | 0,227 | 75,8 |
| II e | 0,45 | 315,61 | 21,60 | 14 | 1,925 | 0,358 | 79,6 |
| II f | 0,613 | 429,49 | 9,44 | 14 | 2,353 | 0,465 | 75,9 |

III. $Ca(OH)_2$ als Katalysator

In einem 50 l Pflugscharmischer mit Messerkopf werden nacheinander 5,254 kg HEC (4,83 % Feuchte), die in Tabelle 3 angegeben Mengen $Ca(OH)_2$, 0,3 kg Wasser und 2,267 kg QUAB (Aktivgehalt 73 %) zugegeben und 10 Minuten intensiv gemischt. Nach 8 Tagen Lagerung bei Raumteperatur wurden folgende Ausbeuten erreicht:

$Ds_{th}$ = 0,45, Feuchtegehalt 13 %

Tabelle 3

| Versuch-Nr. | $\%Ca(OH)_2$ | $\%N_{cation.}$ | $DS_{prakt.}$ | Ausbeute (%) |
|---|---|---|---|---|
| III a | 1 | 1,213 | 0,206 | 45,7 |
| III b | 2 | 1,314 | 0,226 | 50,1 |
| III c | 3 | 1,372 | 0,237 | 52,7 |
| III d | 4 | 1,387 | 0,240 | 53,4 |

IV. Einfluß des Mischertyps

In einem 300 l Pflugscharmischer mit Messerkopf wurden nacheinander 22,6 kg HEC (4,6 % Feuchte), 1,437 kg NaOH (30 Gew.-%), 0,22 kg sprühgetrocknete Kieselsäure (190 $m^2/g$) vorgelegt und 5 Minuten intensiv vermischt. Anschließend wurden 6,525 kg QUAB (72,9 % Aktivgehalt) und 0,7 kg Wasser aufgesprüht und weitere 10 Minuten intensiv gemischt. Nach 4 Tagen Lagerung bei Raumtemperatur wurde der Ansatz mit 2,0 kg HCl (20 Gew.-%) neutralisiert.

Es ergab sich folgende Ausbeute:

Tabelle 4

| Versuch-Nr. | % Feuchte | $DS_{theor.}$ | $\%N_{cation.}$ | $DS_{prakt.}$ | Ausbeute (%) |
|---|---|---|---|---|---|
| IV a | 13 | 0,30 | 1,360 | 0,235 | 78,3 |

V. Einfluß der Reihenfolge der Reagenszugabe

In einem 300 l Pflugscharmischer mit Messerkopf wurden 22,728 g HEC (4,6 % Feuchte) vorgelegt.

Anschließend wurden 10,40 kg QUAB (69,0 % Aktivgehalt), 0,7 kg $H_2O$ und 1,44 kg NaOH (30 Gew.-%) bei laufendem Mischer zugegeben und 10 Minuten intensiv gemischt. Nach 3 Tagen wurde die in Tabelle 5 angegebene Ausbeute erzielt.

Als Vergleichsbeispiel für umgekehrte Reagenszugabe dient Versuch II e
Katalysatormenge: 2 % NaOH, 14 % Gesamtfeuchte

Tabelle 5

| Versuch-Nr. | $DS_{theor.}$ | $\%N_{cation.}$ | $DS_{prakt.}$ | Ausbeute (%) |
|---|---|---|---|---|
| V a | 0,45 | 1,934 | 0,360 | 80,10 |
| II a | 0,45 | 1,925 | 0,358 | 79,6 |

VI. Reaktion bei erhöhter Temperatur

In einem 4 l Pflugscharmischer mit Messerkopf und Heizmantel wurden nacheinander 600 g HEC (4,6 % Feuchte), 274,53 g QUAB (69 % Aktivgehalt), 38,16 g NaOH (30 %) und 22,63 g Wasser bei laufendem Mischer zugegeben und 2,5 Stunden bei 70 °C intensiv vermischt.

Tabelle 6

| Versuch-Nr. | $DS_{theor.}$ | Feuchte | $\%N_{cation.}$ | $DS_{prakt.}$ | Ausbeute (%) | %NaOH |
|---|---|---|---|---|---|---|
| VI a | 0,45 | 13 | 1,769 | 0,322 | 71,6 | 2 % |

VII. Neutralisation mit Adipinsäure

In einem 4 l Pflugscharmischer mit Messerkopf wurden 6000 g HEC (,46 % Feuchte), 274,53 g QUAB (69 % Aktivgehalt), 38,16 g NaOH (30 Gew.-%) und 22,63 g $H_2O$ bei laufendem Mischer zugegeben und intensiv vermischt. Anschließend wurden zur Neutralisation 23 g Adipinsäure (=1,10 Mol-Äquivalente) zugegeben und 5 Minuten gemischt. Nach 8 Tagen Lagerung bei Raumtemperatur wurde folgende Ausbeute erreicht:

Tabelle 7

| Versuch-Nr. | $DS_{theor.}$ | % Feuchte | % NaOH | %N | $DS_{prakt.}$ | Ausbeute (%) |
|---|---|---|---|---|---|---|
| V II a | 0,45 | 13 | 2 | 1,899 | 0,352 | 78,2 |

VIII. Kationisierung von Cellulose

In einem 4 l Pflugscharmischer mit Messerkopf wurden 300 g Cellulose Elcema(R) 100 p (4,3 % Feuchte) und 79,6 g QUAB (67,44 % Aktivgehalt) mit den in Tabelle 8 angegebenen Reagentien 10 Minuten intensiv vermischt.
Nach 2 Tagen Lagerung bei Raumtemperatur wurden die angegebenen Ausbeuten erreicht (Tabelle 8).

$Ds_{theor.}$ = 0,20 Gesamtfeuchte: 13,2 %
Aktivgehalte:
NaOH: 20 Gew.-%

$Ca(OH)_2$: 96 Gew.-%

Tabelle 8

| Versuch-Nr. | NaOH (g) | $Ca(OH)_2$ (g) | $H_2O$ (g) | $\%N_{cation}$ | $DS_{prakt.}$ | Ausbeute (%) | %Katalysator |
|---|---|---|---|---|---|---|---|
| VIII a | 30,6 | - | - | 1,19 | 0,158 | 79 | 2,1 |
| VIII b | - | 3,36 | 23,96 | 0,692 | 0.087 | 43,5 | 1,2 |

IX. Kationisierung von Methylhydroxyethylcellulose

In einem 4 l Pflugscharmischer mit Messerkopf wurden 600 g Tylose MH 200 xp (5,6 % Feuchte) bzw. 600 g Tylose MHB 10 000 yp (8,3 % Feuchte) mit den in Tabelle 9 angegebenen Reagentien 10 Minuten intensiv vermischt. Nach 2 Tagen Lagerung bei Raumtemperatur wurden die angegebenen Ausbeuten erzielt.
QUAB-Konzentration: 70,5 % Aktivgehalt
Katalysatormenge: 2 % (atro) als 30 Gew.-%Lösung

Tabelle 9

| Versuch-Nr. | DS | QUAB (g) | NaOH (g) | $H_2O$ (g) | Gesamtfeuchte (%) | %N | DS | Ausbeute (%) | Cellulose-Derivat |
|---|---|---|---|---|---|---|---|---|---|
| IXa | 0,20 | 110,64 | 37,76 | 16,13 | 13 | 0,887 | 0,154 | 77,2 | MH 2000 xp |
| IXb | 0,20 | 109,0 | 37,2 | 6,98 | 13 | 0,761 | 0,130 | 65,2 | MHB 10000 yp |

Analysenergebnisse nach Auswaschen mit Aceton/$H_2O$ (80 : 20)

X. Kationisierung von Na-Carboxymethylcellulose

In einem 4 l Pflugscharmischer mit Messerkopf wurden 600 g Tylose C 1000 p (8,3 % Feuchte) bzw. 700 g Tylose CB 30000 p (10,5 % Feuchte) mit den in Tabelle 10 angegebenen Reagentien 10 Minuten intensiv vermischt.
Nach 6 Tagen Lagerung bei Raumtemperatur wurden die angegebenen Ausbeuten erzielt.
$DS_{theor.}$ = 0,20
QUAB-Aktivgehalt 70,5 %
NaOH-Gehalt: 2 % zugesetzt als 30 Gew.-%ige Lösung

Tabelle 10

| Versuch-Nr. | QUAB | NaOH | $H_2O$ | Gesamtfeuchte | $\%N_{cation.}$ | $DS_{pract.}$ | Ausbeute (%) | Cellulose-derivat |
|---|---|---|---|---|---|---|---|---|
| X a | 96,53 | 36,68 | 8,02 | 14 % | 0,254 | 0,046 | 22,9 | C 1000 p |
| X b | 109,92 | 41,77 | 33.52 | 18 % | 0,233 | 0,042 | 20,9 | CB 30000 p |

Analysenergebnisse nach Auswaschen mit Aceton/$H_2O$ (80:20).

**Ansprüche**

1. Verfahren zur Herstellung von tertiären oder quaternären Stickstoff enthaltenden Celluloseethern durch Umsetzung von Alkylenepoxiden mit Cellulosen bzw. deren Derivaten in alkalischem Medium in Gegenwart von Wasser,
dadurch gekennzeichnet, daß die Reaktionsmischung 10 bis 25 Gew.-% Wasser enthält, bezogen auf deren Gesamtmenge, und in pulverförmigem Zustand vorliegt.

2. Verfahren gemäß Anspruch 1,dadurch gekennzeichnet, daß man Alkylenepoxide oder deren Gemische mit den allgemeinen Formeln

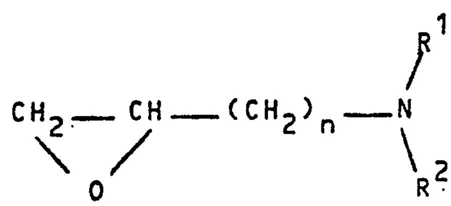

(I)

oder

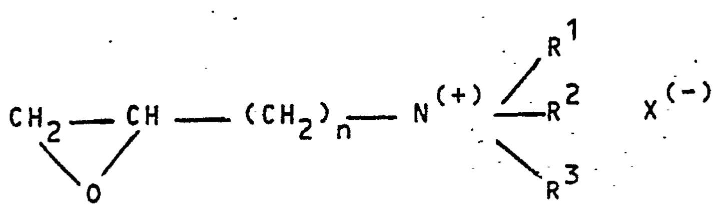

(II)

einsetzt, in denen n = 1, 2 oder 3 ist, $R^1$, $R^2$ und $R^3$ gleichen oder verschiedenen Alkylresten mit 1 bis 18 Kohlenstoffatomen oder $R^1$ dem Benzylrest oder $-C_2H_4OH$ entspricht, und X-Chlorid, Bromid, Sulfat oder Acetat bedeuten.

3. Verfahren gemäß den Ansprüchen 1 bis 2,
dadurch gekennzeichnet, daß man die Reaktionsmischung aus Cellulose bzw. Derivaten, alkalisierend wirkenden Substanz(en), Wasser und Alkylenepoxid in einem Intensivmischer innerhalb von 10 Sekunden bis 25 Minuten homogenisiert, dann ausschleust und in dem vorgesehenen Lagerbehältnis ausreagieren läßt.

4. Verfahren gemäß den Ansprüchen 1 bis 3,
dadurch gekennzeichnet, daß die Reaktionsmischung 0,01 bis 2,0 Gew.-%, bezogen auf die Gesamtmenge, einer feinteiligen hydrophilen und/oder hydrophoben Kieselsäure enthält.

5. Verfahren gemäß Ansprüchen 1 bis 4,
dadurch gekennzeichnet, daß man als Intensivmischer einen Pflugscharmischer benutzt.

6. Verfahren gemäß den Ansprüchen 1 bis 4,
dadurch gekennzeichnet, daß man als Intensivmischer einen Durchflußbefeuchtungsmischer benutzt.